# EUROPEAN PATENT SPECIFICATION

(11) **EP 2 346 126 B1**
(45) Date of publication and mention of the grant of the patent: **04.07.2018**
(21) Application number: 10150947.9
(22) Date of filing: 18.01.2010
(51) Int. Cl.: H02B 11/02

(54) **Medium voltage air insulated switchgear.**
Luftisolierte Mittelspannungsschaltanlage
Appareil de commutation moyenne tension à isolement dans l'air

(43) Date of publication of application: 20.07.2011
(73) Proprietor: ABB Schweiz AG, 5400 Baden (CH)
(72) Inventor: Bertolotto, Pierino, I-24128, Bergamo (IT)
(74) Representative: De Bortoli, Eros

(56) References cited:
- EP-A1- 2 071 686
- DE-A1- 2 937 702
- GB-A- 1 229 834
- US-A- 3 894 204
- US-B1- 6 291 783

## Description

The present invention relates to a medium voltage air insulated switchgear with improved features, and in particular to medium voltage air insulated switchgear having a greater flexibility of application, i.e. an easier possibility to be adapted to different configuration according to the needs. For the purposes of the present application the term medium voltage is referred to applications in the range of between 1 and 52 kV.

Medium voltage air insulate switchgear are well known in the art and they usually consist of a casing which defines an internal volume for housing a circuit breaker unit a bus-bar assembly, as well as other systems, such as a feeder system and possible auxiliary equipment.

The circuit breaker unit is normally positioned inside a circuit breaker compartment, said circuit breaker unit being, in the so-called withdrawable configuration, movable between a service position, in which it is connected to the bus-bar and feeder systems, and a test/disconnected position in which it is isolated from the bus-bar and feeder systems. Patent GB 1229834 discloses an air insulated switchgear comprising a withdrawable multipole circuit-breaker with vertically aligned bushings. Depending on the intended applications, the internal volume of the casing also houses a number of different components and apparatuses, such as current transformers, voltage transformers and earthing switches which can be used with a manual or motor-operated mechanism, as well as other additional or alternative components.

Also the bus bar assembly and the feeder system are normally positioned in a dedicated compartment and, depending on the service continuity requirements, different degrees of physical and electrical segregation among the compartments can be envisaged.

In a first configuration, there is no physical and electrical segregation among the compartments and in such a case the whole switchgear has to be put out of service before opening the cabinet or for having access to any switchgear components.

In order to avoid such discontinuity of service, and to keep at least some of the compartments energized, a physical and electrical segregation among the compartments is achieved by using plastic and/or metallic partitioning systems.

Thus, in a second configuration, a physical and electrical segregation between the bus bar compartment and the compartments housing the remaining apparatus is foreseen. In such a case, the main bus bar can remain energized even in case of access by an operator to other switchgear components for normal operation and/or normal maintenance.

Then, in a third configuration, the bus bar, the circuit breaker and the feeder compartments are physically and electrically segregated from each other and in this case the main bus bar and the feeder system can remain energized even in case of access by an operator to other the circuit breaker compartment.

In case of withdrawable configuration of the circuit breaker, when a physical and electrical segregation between the compartments is present, a partitioning system having movable partitioning walls is normally required so as to allow the movement of the circuit breaker terminals between the compartments.

Currently, the movement of the movable partitioning walls is actuated through a complex kinematic chain with levers and pins which links the movable partitioning walls to the switch truck. It has to be noted that, the transmission of the movement to the movable partitioning walls through a kinematic chain, permanently linking the movable partitioning walls to the switch truck, involves the construction and assembly of a large number of parts. The kinematic chain itself is very complex, combining rotational and translational movements, with the possibility of failures of the movement.

Thus, depending on the intended application, the internal volume of the switchgear need to be designed so as to allow installation of the various components in accordance with the desired typology of segregation among the compartments required by the intended application. At the current state of the art, it is normally very difficult or even not possible to change the configuration of a switchgear and to adapt it to different typologies of segregations among the compartments.

At the same time, also the circuit breaker unit needs to be adapted according to the needs and, in general, a number of different circuit breaker configurations are needed in order to realize different panel configurations. In particular, most circuit breaker solutions of known type include contact arms, i.e. the arms connecting the circuit breaker to the bus bar and feeder systems, which are perpendicular to the longitudinal axis of the interruption unit thereby increasing the electrodynamic stress, due to the non-linear path of the current.

It should also be noted that the presence of an earthing switch, in addition to require some dedicated internal space, also requires dedicated manual or motor-operated actuation systems and a series of mechanical interlocks, with a consequent increase of complexity of the panel as well as manufacturing and installation costs thereof.

It is therefore an object of the present invention to provide a medium voltage air insulated switchgear in which the above-mentioned drawbacks are avoided or at least reduced.

More in particular, it is an object of the present invention to provide medium voltage air insulated switchgear having a greater flexibility of application with respect to the conventional medium voltage air insulated switchgear.

As a further object, the present invention is aimed at providing a medium voltage air insulated switchgear in which different degrees of segregation among the compartments can be easily achieved, thereby achieving different switchgear configurations in terms of service continuity.

A further object of the present invention is to provide a medium voltage air insulated switchgear in which the interruption and disconnection operations can be can be carried out very easily and with a reduced number of components thereby allowing to minimize the occupied space inside the panel.

Still a further object of the present invention is to provide a medium voltage air insulated switchgear in which the electrodynamic stresses are reduced.

Another object of the present invention is to provide a medium voltage air insulated switchgear having a reduced number of mechanical parts.

Another object of the present invention is to provide a medium voltage air insulated switchgear having a partitioning system with improved functionality.

Still another object of the present invention is to provide a medium voltage air insulated switchgear with reduced manufacturing, installation and maintenance costs.

Thus, the present invention relates to an air insulated medium voltage switchgear which is characterized in that it comprises a casing which defines an internal volume for housing at least a circuit breaker assembly and a bus bar assembly. In the medium voltage air insulated switchgear of the invention, said circuit breaker assembly is movable between at least two operative positions and comprises an insulating base frame supporting an interruption unit, an actuator for actuating the opening/closing operation of said interruption unit and a kinematic chain operatively connecting said actuator to said interruption unit. Furthermore, said circuit breaker assembly comprises, for each phase, at least a first and a second insertion contacts which are couplable and uncouplable to corresponding first and second fixed contacts by moving said circuit breaker assembly
In this way, it is possible to overcome some of the disadvantages and drawbacks of the circuit breaker of the known art.

In particular, the use of a circuit breaker assembly in a withdrawable configuration (i.e. movable between at least two operative positions) and comprising an insulating base frame supporting an interruption unit, an actuator and a kinematic chain operatively connecting said actuator to said interruption unit, allows to easily adapt the switchgear of the invention to different segregation typologies.

Another important advantage derives form the fact that, as better explained in the following description, it is possible to realize a linear current path minimizing the current path itself and avoiding current turns, thereby permitting to optimize the heating effects, to reduce the electrodynamic mechanical stresses and to design a cheaper switchgear.

A further advantage resides in that the number of components and operating parts is reduced, since it is no longer necessary to have an earthing switch and the corresponding motor or manual-operated actuation systems and mechanical interlocks with circuit breaker, with a consequent reduction of manufacturing, installation and maintenance costs.

Also, according to a particular embodiment of the invention, the movement of movable partition shutter is obtained directly from the circuit breaker, or a part thereof during the insertion and extraction operations. The number of components is therefore greatly reduced, with consequent reduction of costs and time of manufacturing, installation and maintenance. The risk of failure of movement is also reduced, since there is no kinematic chain interposed between the circuit breaker and the partitioning device
In a preferred embodiment of the air insulated medium voltage switchgear according to the invention, said first fixed contact is electrically connected to said bus bar assembly and said second fixed contact is electrically connected to a feeder system.

The air insulated medium voltage switchgear according to the invention preferably comprises a third and a fourth fixed contacts, at least one of said third and a fourth fixed contacts being at ground potential, said circuit breaker assembly being movable between a first disconnected position, a second grounded position, in which said first and second insertion contacts are respectively electrically connected to said third and fourth fixed contacts, and a third connected position, in which said first and second insertion contacts are respectively electrically connected to said first and second fixed contacts. According to the invention, said third and fourth fixed contacts are vertically aligned so as to realize a linear current path. For the same reason, also said first and second fixed contacts can be advantageously vertically aligned.

According to a possible embodiment, the air insulated medium voltage switchgear of the invention comprises a first partitioning system which defines a first compartment for housing said bus bar assembly and separates said first compartment from a second compartment housing said circuit breaker assembly.

According to a further possible embodiment, the air insulated medium voltage switchgear of the invention comprises a second partitioning system which defines a third compartment for housing a feeder system and separates said third compartment from said second compartment housing said circuit breaker assembly.

Said first and/or second partitioning systems can be made of an insulating material; alternatively, said first and/or second partitioning systems can be made of a conductive material.

In the air insulated medium voltage switchgear according to the invention, said circuit breaker assembly can comprise, for each phase, at least a first bushing.

Also, when a partitioning system is present in the air insulated medium voltage switchgear according to the invention that said partitioning system can advantageously comprise a shutter that can be opened/closed by interaction with said bushing.

Preferably, said bushing is a grading bushing having an insulation system based on grading capacitors electrical field control.

In such a case, said first and/or second partitioning systems and said shutter can be conveniently made of conductive material and said grading capacitors electrical field control can comprise, on the external surface of said bushing, a metallic concentric layer, which is preferably operatively couplable to said metallic shutter for grounding said grading bushing.

According to a particular embodiment of the air insulated medium voltage switchgear of the invention, said circuit breaker assembly preferably comprises, for each phase, a second bushing. In such a case said first partitioning system preferably comprises a shutter that can be opened/closed by interaction with said first bushing and said second partitioning system also preferably comprises a shutter that can be opened/closed by interaction with said second bushing.

Further characteristics and advantages of the invention will emerge from the description of preferred, but not exclusive embodiments of an air insulated medium voltage switchgear according to the invention, non-limiting examples of which are provided in the attached drawings, wherein:
Figure 1 is a schematic side view of a first embodiment of an air insulated medium voltage switchgear according to the invention;
Figure 2 is a schematic side view of a second embodiment of an air insulated medium voltage switchgear according to the invention;
Figure 3 is a schematic side view of a third embodiment of an air insulated medium voltage switchgear according to the invention;
Figure 4 is a schematic side view of a fourth embodiment of an air insulated medium voltage switchgear according to the invention;
Figure 5 is a schematic side view of a circuit breaker assembly useable in the air insulated medium voltage switchgear of figure 1;
Figure 6 is a schematic side view of a circuit breaker assembly useable in the air insulated medium voltage switchgear of figure 2;
Figure 7 is a schematic side view of a circuit breaker assembly useable in the air insulated medium voltage switchgear of figure 3;
Figure 8 is a schematic side view of a circuit breaker assembly useable in the air insulated medium voltage switchgear of figure 4.

With reference to the attached figures, an air insulated medium voltage switchgear 1 according to the invention, designed with the reference number 1, comprises, in its more general definition, a casing 2 which defines an internal volume 3.

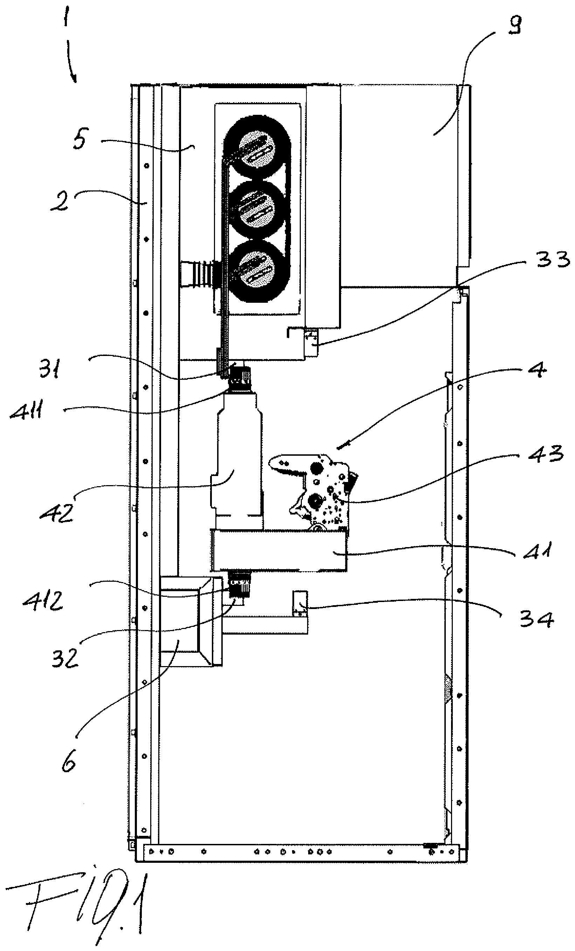

At least a circuit breaker assembly 4 and a bus bar assembly 5 are housed inside the internal volume 3, said circuit breaker assembly 4 being movable between at least two operative positions, e.g. a test/disconnected position and a service position in which it is connected to the bus bar assembly 5. In the attached figures 1-4, the circuit breaker assembly 4 is represented in the service position.

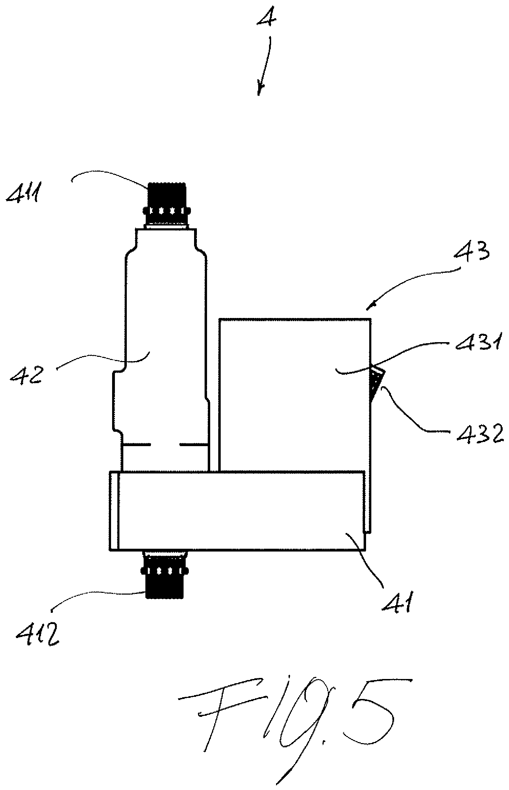

With reference also to figure 5-8, one of the characterizing features of the invention resides in that the circuit breaker assembly 4 normally comprises an insulating base frame 41 supporting an interruption unit 42, an actuator 43 for actuating the opening/closing operation of said interruption unit 42 and a kinematic chain operatively connecting said actuator 43 to said interruption unit 42. The interruption unit 42 usually comprises, for each phase, an interruption chamber housing a first fixed interruption contact and a second movable interruption contact (fixed and movable interruption contacts are not shown in the attached drawings). Normally the circuit breaker is a three-phase circuit breaker and thus comprises three interruption chambers which house corresponding sets of fixed/movable interruption contacts reciprocally couplable/uncouplable between an open and close position. Fixed and movable contacts can be conventional interruption contacts of known type and therefore will not be described in more details.

As shown in figures 5-8, the actuator 43 is usually housed in a casing 431 and an operating interface 432 is also usually present (not shown in figures 1-4). The actuator 43 moves, through said kinematic chain, said second movable interruption contact between a first position in which it is in electrical connection with the corresponding fixed interruption contact and a second position in which they are spaced apart. For the purposes of the present invention, the actuator 43 can be a conventional actuator of known type and therefore will not be described in more details, being known *per se.*

A further characteristics of the air insulated medium voltage switchgear 1 according to the invention, consists in that said circuit breaker assembly 4 further comprises, for each phase, at least a first 411 and a second 412 insertion contacts, electrically connected to a respective fixed or movable interruption contact of said interruption unit 42. As an example, the insertion contacts can be conventional tulip or sliding contacts.

The first 411 and second 412 insertion contacts are couplable and uncouplable to corresponding first 31 and second 32 fixed contacts by moving said circuit breaker assembly 4.

Preferably, in the air insulated medium voltage switchgear 1 according to the invention said first fixed contact 31 is electrically connected to said bus bar assembly 5 while said second fixed contact 32 is electrically connected to a feeder system 6.

Thus, by moving the circuit breaker assembly 4, it is possible to couple and uncouple the first 411 and second 412 insertion contacts to the corresponding first 31 and second 32 fixed contacts, thereby realizing a service position (as shown in the attached figures 1-4) in which the first 411 and second 412 insertion contacts are electrically coupled to the corresponding first 31 and second 32 fixed contacts, or a test/disconnected position (not shown in the figures) in which the first 411 and second 412 insertion contacts are isolated form the corresponding first 31 and second 32 fixed contacts.

According to a preferred embodiment of the invention, the air insulated medium voltage switchgear 1 further comprises a third 33 and a fourth 34 fixed contacts, at least one of said third 33 and a fourth 34 fixed contacts being at ground potential.

In such a case, said circuit breaker assembly 4 is conveniently movable between:
a first disconnected position (not shown in the attached figure), in which the first 411 and second 412 insertion contacts are respectively spaced apart from said first 31 and second 32 fixed contacts and from said third 33 and fourth 34 fixed contacts;
a second grounded position (not shown in the attached figure), in which said first 411 and second 412 insertion contacts are respectively electrically connected to said third 33 and fourth 34 fixed contacts;
and a third connected position (shown in figures 1-4), in which said first 411 and second 412 insertion contacts are respectively electrically connected to said first 31 and second 32 fixed contacts,
thereby realizing, in addition to the interruption functions proper of the circuit breaker unit, also the disconnection and ground connections.

In this way, it is possible to combine the interruption operations and the disconnection operations in a very compact and simplified manner without the need of having dedicated grounding switches and the related operating mechanism. This allows to reduce the number of components, thereby reducing the manufacturing, installation and maintenance costs. Its simplified construction and operating concepts allows further saving of costs, particularly in terms of copper connections normally needed in conventional switchgears.

As shown in the attached figures 1-4, in the air insulated medium voltage switchgear 1 according to the invention, said third 33 and fourth 34 fixed contacts are preferably positioned inside the internal volume 3 of the switchgear 1 so as to be vertically aligned.

In a similar manner, also said first 31 and second 32 fixed contacts are preferably positioned inside the internal volume 3 of the switchgear 1 so as to be vertically aligned.

In other words, thanks to the use of an insulating base frame 41 for supporting the interruption unit 42, it is possible to have the live exit from the lower surface of the insulating base frame 41, thereby creating a linear current path (i.e. parallel to the axis of the interruption chamber) between the contacts 411 and 412. Consequently, electrodynamic stresses due to non-linear current paths, as in most of the conventional switchgears, are greatly reduced.

One of the most important features of the air insulated medium voltage switchgear 1 according to the invention resides in its flexibility of application with respect to the conventional medium voltage air insulated switchgear, and in particular in its capability to achieve different degrees of segregation among the compartments in a very easy manner, thereby achieving different switchgear configurations in terms of service continuity.

In this respect, figure 1 shows a situation in which there is no physical and electrical segregation among the compartments housing the bus bar assembly 5, the circuit breaker assembly 4 and the feeder system 6. For obtaining such a switchgear configuration, the circuit breaker assembly 4 can have the very simple configuration of figure 5.

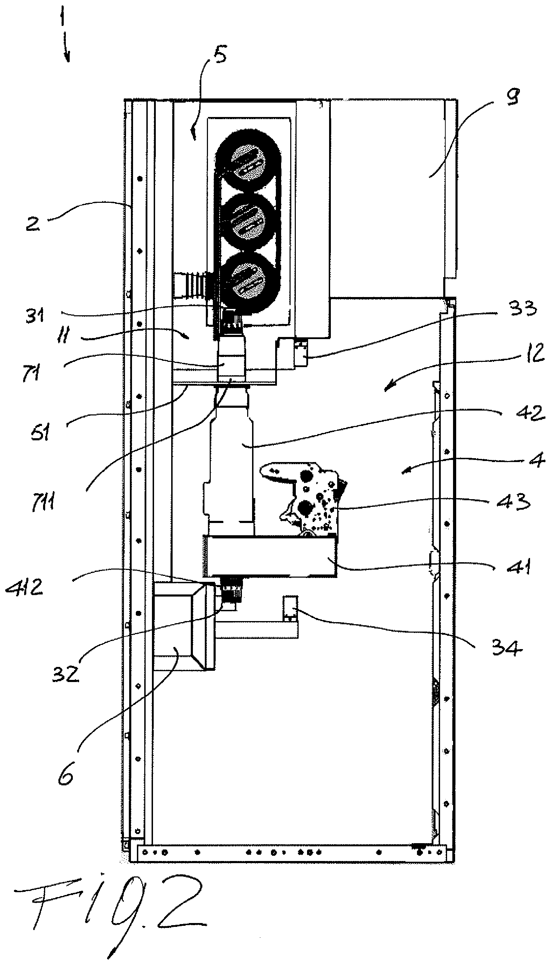

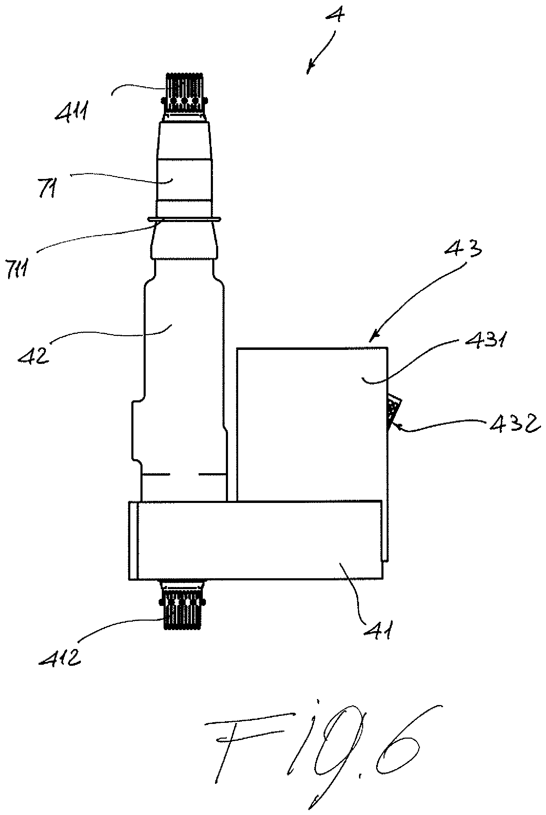

With reference to figure 2, a switchgear configuration in which the bus bar assembly is segregated from the remaining parts of the switchgear can be achieved by using a first partitioning system 51, properly positioned inside the internal volume 3 so as to define a first compartment 11 for housing said bus bar assembly 5 and separate said first compartment 11 from a second compartment 12 housing said circuit breaker assembly 4. In such a case, with reference to figure 6, the circuit breaker assembly can conveniently have a configuration including, for each phase, at least a first bushing 71, protruding from the interruption unit 42 and having, on a distal end thereof, an insertion contact 411 in electrical connection with a corresponding interruption contact inside said interruption unit.

Thus, very few modifications are needed in order change a switchgear from the non-segregated configuration of figure 1 to the partially segregated configuration of figure 2. In practice, starting from the configurations of figure 1 and 5, it is sufficient to add a bushing 71 for each phase of the circuit breaker assembly and install a proper partitioning system 51 in order to obtain the configurations of figures 2 and 6.

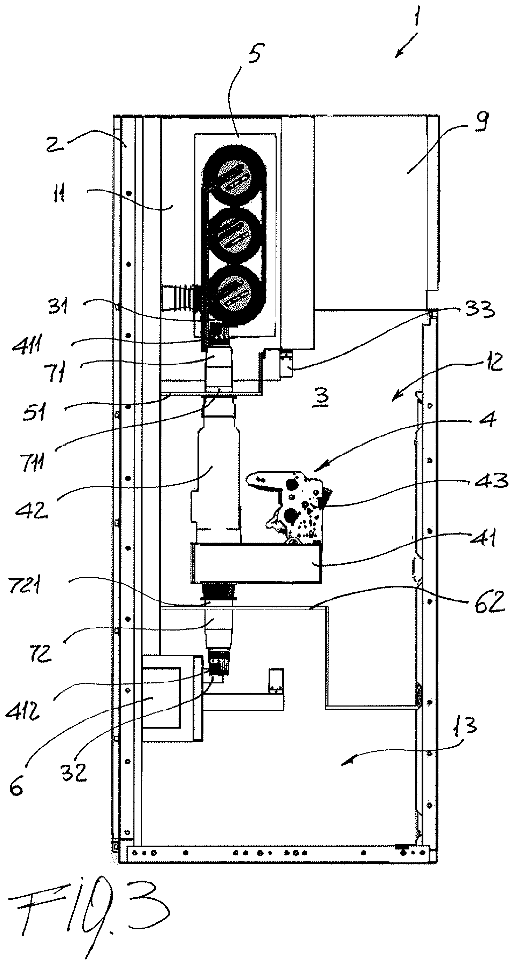

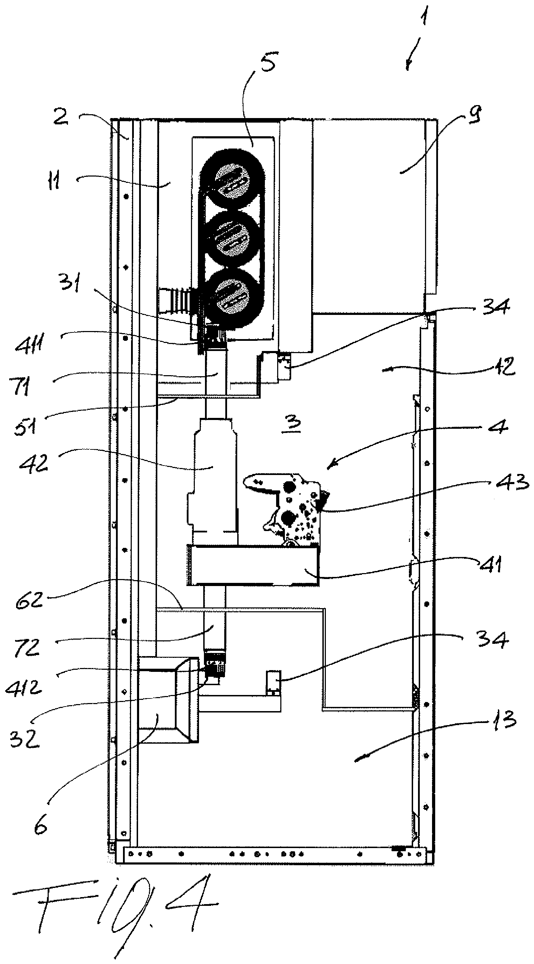

In the same way, with reference to figures 3 and 4, a switchgear configuration in which both the bus bar assembly and the feeder system are segregated from the circuit breaker assembly can be achieved by using, in addition to said first partitioning system 51, a second partitioning system 62 which defines a third compartment 13 for housing a feeder system 6 and separates said third compartment 13 from said second compartment 12 housing said circuit breaker assembly 4. In this way it is possible to achieve a fully segregated configuration, i.e. a situation in which both the bus-bar compartment 11 and the feeder compartment 13 are physically and electrically segregated from the main circuit breaker compartment.

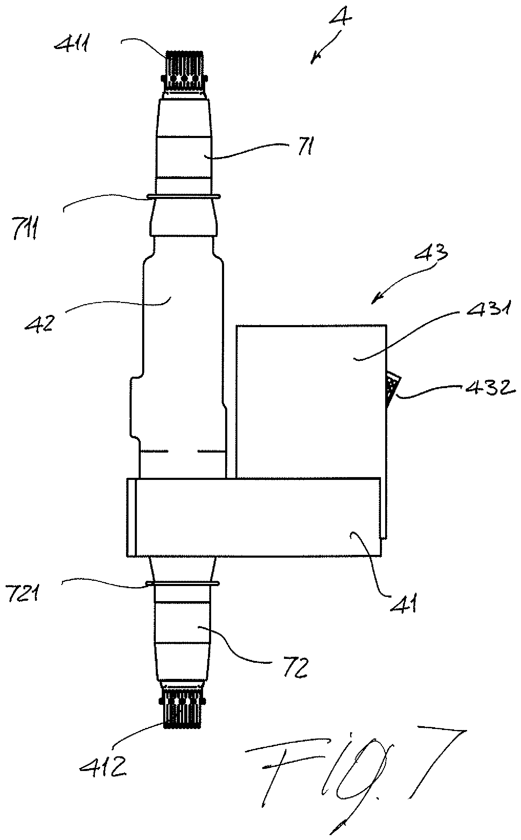

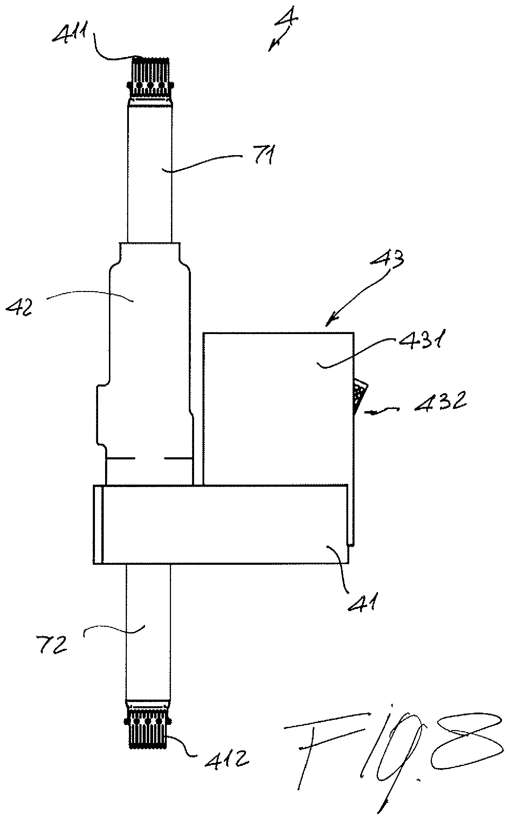

In this respect, with reference to figures 7 and 8, the circuit breaker assembly can conveniently have a configuration including, for each phase, a first bushing 71, protruding from the interruption unit 42 and having, on a distal end thereof, a first insertion contact 411 in electrical connection with a corresponding interruption contact (e.g. the fixed interruption contact) inside said interruption unit 42, as well as a second bushing 72, protruding from the insulating base frame 41 of the circuit breaker assembly 4 and having, on a distal end thereof, a second insertion contact 411 in electrical connection with a corresponding interruption contact (e.g. the movable interruption contact) inside said interruption unit 42.

Also in this case, very few modifications are needed in order to change a switchgear from the non-segregated configuration of figure 1 or from the partially segregated configuration of figure 2, to the fully segregated configuration of figure 3 and 4.

Depending on the intended applications, said first 51 and/or second 62 partitioning systems can be made of insulating material or, alternatively said partitioning system 51 and 62 can be made of conductive material.

According to a particularly preferred embodiment, applicable to partially segregated configurations, as well as to fully segregated configurations of an air insulated medium voltage switchgear 1 according to the invention, said first 51 and/or second 62 partitioning systems can conveniently comprise a movable shutter that can be opened/closed by interaction with said circuit breaker assembly, in particular by interaction with said bushing 71 and/or 72.

In this way, the movement of the movable partition shutter is obtained directly from the movement of the circuit breaker assembly 4, or a part thereof (e.g. the bushings 71 and/or 72) during the insertion operations of the insertion contacts 411 and 412 into the corresponding first 31 and second 32 fixed contacts. The number of components is therefore greatly reduced, with consequent reduction of costs and time of manufacturing, installation and maintenance.

In practice, as an example, with reference to figure 2, said first 51 partitioning systems can conveniently comprise a shutter that can be opened/closed by interaction with said bushing 71. In the same way, with reference to figure 3 and 4, the first partitioning system can conveniently comprise a shutter that can be opened/closed by interaction with said first bushing 71, while the second partitioning system 62 can conveniently comprise a shutter that can be opened/closed by interaction with said second bushing 72.

The bushings 71 and 72 can be conventional bushings, as shown in figures 4 and 8.

However, according to a preferred embodiment of an air insulated medium voltage switchgear 1 according to the invention, shown in figure 2, 3, 6 and 7, said bushing 71 or 72 can be conveniently a grading bushing having an insulation system based on grading capacitors electrical field control. In such a case, the grading capacitors electrical field control allows to minimize the radial insulating dimension of the circuit breaker arms constituted by the bushings 71 and 72.

The grading capacitors electrical field control preferably includes, on the external surface of said bushing 71 or 72, a metallic concentric layer 711 to be put at ground potential.

When a grading bushing is used, the first 51 and/or second 62 partitioning systems and said shutter are preferably made of conductive material, e.g. metallic material. In such a case, grounding of the metallic concentric layer 711 can be conveniently achieved, according to a particularly preferred embodiment not shown in details in the present application, by putting in connection said metallic concentric layers with the metallic shutters of the first 51 and/or second 62 partitioning systems.

In this way, it is possible to obtain not only the opening/closing operation of the movable shutters of the first 51 and second 62 partitioning systems, but also the grounding of the grading capacitors system when the circuit breaker assembly 4 is in the service position (i.e. in the positions of figures 1-4)

It is clear from the above that the air insulated medium voltage switchgear of the invention have a number of advantages with respect to air insulated medium voltage switchgears of known type.

In particular, as explained above, the air insulated medium voltage switchgear of the invention has a greater flexibility of application with respect to the conventional medium voltage air insulated switchgear, since it is possible to achieve different degrees of segregation among the compartments in a very easy manner, thereby achieving different switchgear configurations in terms of service continuity.

As a matter of facts, thanks also to the set-up of the circuit breaker assembly 4 with a few components (interruption unit 42, actuator 43 and kinematic chain) supported by the insulating base frame 41, it is possible with only a few accessories (e.g., circuit breaker bushings 71 and 72 and insertion contacts 411 and 412) to change the configuration of the circuit breaker assembly 4 and adapt it to the intended switchgear configuration in terms of compartments segregation.

Also, in the air insulated medium voltage switchgear of the invention, the electrodynamic stresses are reduced, since a linear current path (i.e. a current path parallel to the longitudinal axis of the interruption chamber) can be obtained, e.g. by properly aligning the fixed contacts 31,32 and 33,34.

Also, as explained above, in the air insulated medium voltage switchgear of the invention, it is possible to combine the interruption operations and the disconnection operations in a very compact and simplified manner without the need of having dedicated grounding switches and the related operating mechanism. This allows to reduce the number of components, thereby reducing the manufacturing, installation and maintenance costs. Its simplified construction and operating concepts allows further saving of costs, particularly in terms of copper connections normally needed in conventional switchgears.

It is also worth mentioning that, at least for particular embodiments of the air insulated medium voltage switchgear of the invention, the movement of the movable partition shutter is obtained directly from the movement of the circuit breaker assembly, or a part thereof (e.g. the bushings) during the insertion operations. Consequently, the number of components is therefore greatly reduced, with consequent reduction of costs and time of manufacturing, installation and maintenance

The air insulated medium voltage switchgear thus conceived may undergo numerous modifications and come in several variants, all coming within the scope of the inventive concept. Moreover, all the component parts described herein may be substituted by other, technically equivalent elements. In practice, the component materials and dimensions of the device may be of any nature, according to need and the state of the art.

## Claims

1. An air insulated medium voltage switchgear (1) comprising a casing (2) defining an internal volume (3) for housing at least a circuit breaker assembly (4) and a bus bar assembly (5), said circuit breaker assembly (4) being movable between at least two operative positions and comprising for each phase, at least a first (411) and a second (412) insertion contacts couplable and uncouplable to corresponding first (31) and second (32) fixed contacts by moving said circuit breaker assembly (4), **characterized in that** said circuit breaker assembly (4) further comprises an insulating base frame (41) supporting an interruption unit (42) comprising for each phase an interruption chamber, an actuator (43) for actuating the opening/closing operation of said interruption unit (42) and a kinematic chain operatively connecting said actuator (43) to said interruption unit (42), said second insertion contact (412) being outwardly positioned with respect to a lower surface of said insulating frame, said first and second insertion contacts (411, 412) being vertically aligned, a linear current path parallel to an axis of said interruption chamber being created between said first and second insertion contacts.

2. The air insulated medium voltage switchgear (1) according to claim 1, **characterized in that** said first fixed contact (31) is electrically connected to said bus bar assembly (5) and said second fixed contact (32) is electrically connected to a feeder system (6).

3. The air insulated medium voltage switchgear (1) according to claim 1 or 2, **characterized in that** it comprises a third (33) and a fourth (34) fixed contacts, at least one of said third (33) and a fourth (34) fixed contacts being at ground potential, said circuit breaker assembly (4) being movable between a first disconnected position, a second grounded position, in which said first (411) and second (412) insertion contacts are respectively electrically connected to said third (33) and fourth (34) fixed contacts, and a third connected position, in which said first (411) and second (412) insertion contacts are respectively electrically connected to said first (31) and second (32) fixed contacts.

4. The air insulated medium voltage switchgear (1) according to claim 3, **characterized in that** said third (33) and fourth (34) fixed contacts are vertically aligned.

5. The air insulated medium voltage switchgear (1) according to one or more of the previous claims, **characterized in that** said first (31) and second (32) fixed contacts are vertically aligned.

6. The air insulated medium voltage switchgear (1) according to one or more of the previous claims, **characterized in that** it comprises a first partitioning system (51) which defines a first compartment (11) for housing said bus bar assembly (5) and separates said first compartment (11) from a second compartment (12) housing said circuit breaker assembly (4).

7. The air insulated medium voltage switchgear (1) according to claim 6, **characterized in that** it comprises a second partitioning system (62) which defines a third compartment (13) for housing a feeder system (6) and separates said third compartment (13) from said second compartment (12) housing said circuit breaker assembly (4).

8. The air insulated medium voltage switchgear (1) according to claim 6 or 7, **characterized in that** said first (51) and/or second (62) partitioning systems are made of insulating material.

9. The air insulated medium voltage switchgear (1) according to claim 6 or 7, **characterized in that** said first (51) and/or second (62) partitioning systems are made of conductive material.

10. The air insulated medium voltage switchgear (1) according to one or more of claims from 6 to 9, **characterized in that** said circuit breaker assembly (4) comprises, for each phase, at least a first bushing (71).

11. The air insulated medium voltage switchgear (1) according to claim 10, **characterized in that** said first (51) and/or second (62) partitioning systems comprises a shutter that can be opened/closed by interaction with said bushing (71).

12. The air insulated medium voltage switchgear (1) according to claims 9 and 10, **characterized in that** said bushing (71) is a grading bushing having an insulation system based on grading capacitors electrical field control.

13. The air insulated medium voltage switchgear (1) according to claims 11 and 12, **characterized in that** said first (51) and/or second (62) partitioning systems and said shutter are made of conductive material and **in that** said grading capacitors electrical field control comprises, on the external surface of said bushing (71), a metallic concentric layer (711).

14. The air insulated medium voltage switchgear (1) according to claim 13, **characterized in that** said metallic concentric layer (711) is operatively couplable to said metallic shutter for grounding said grading bushing.

15. The air insulated medium voltage switchgear (1) according to claims 7 and 11, **characterized in that** said circuit breaker assembly (4) comprises, for each phase, a second bushing (72), said first partitioning system (51) comprising a shutter that can be opened/closed by interaction with said first bushing (71), said second partitioning system (62) comprising a shutter that can be opened/closed by interaction with said second bushing (72).

## Patentansprüche

1. Luftisolierte Mittelspannungsschaltanlage (1), die ein Gehäuse (2) umfasst, das ein Innenvolumen (3) zum Aufnehmen zumindest eines Leistungsschalteraufbaus (4) und eines Sammelschienenaufbaus (5) definiert, wobei der Leistungsschalteraufbau (4) zwischen mindestens zwei Wirkstellungen bewegbar ist und für jede Phase zumindest einen ersten (411) und einen zweiten (412) Einsteckkontakt umfasst, die durch Bewegen des Leistungsschalteraufbaus (4) mit einem entsprechenden ersten (31) und zweiten (32) Festkontakt kuppelbar und von diesen entkuppelbar sind, **dadurch gekennzeichnet, dass** der Leistungsschalteraufbau (4) weiter ein isolierendes Grundgestell (41) umfasst, das eine Unterbrechungseinheit (42) trägt, die für jede Phase eine Unterbrechungskammer, einen Aktor (43) zum Auslösen des Öffnungs- / Schließvorgangs der Unterbrechungseinheit (42) und eine kinematische Kette, die den Aktor (43) wirksam mit der Unterbrechungseinheit (42) verbindet, umfasst,
wobei der zweite Einsteckkontakt (412) bezüglich einer Unterseite des isolierenden Gestells außen positioniert ist, wobei der erste und der zweite Einsteckkontakt (411, 412) vertikal ausgerichtet sind, wobei ein zu einer Achse der Unterbrechungskammer paralleler linearer Strompfad zwischen dem ersten und dem zweiten Einsteckkontakt erzeugt wird.

2. Luftisolierte Mittelspannungsschaltanlage (1) nach Anspruch 1, **dadurch gekennzeichnet, dass** der erste Festkontakt (31) elektrisch mit dem Sammelschienenaufbau (5) verbunden ist und der zweite Festkontakt (32) elektrisch mit einem Einspeisesystem (6) verbunden ist.

3. Luftisolierte Mittelspannungsschaltanlage (1) nach Anspruch 1 oder 2, **dadurch gekennzeichnet, dass** sie einen dritten (33) und einen vierten (34) Festkontakt umfasst, wobei zumindest einer des dritten (33) und eines vierten (34) Festkontakts auf Massepotenzial liegt, wobei der Leistungsschalteraufbau (4) zwischen einer ersten Trennstellung, einer zweiten Erdungsstellung, in der der erste (411) und der zweite (412) Einsteckkontakt elektrisch mit dem dritten (33) bzw. dem vierten (34) Festkontakt verbunden sind, und einer dritten Anschlussstellung, in der der erste (411) und der zweite (412) Einsteckkontakt elektrisch mit dem ersten (31) bzw. dem zweiten (32) Festkontakt verbunden sind, bewegbar ist.

4. Luftisolierte Mittelspannungsschaltanlage (1) nach Anspruch 3, **dadurch gekennzeichnet, dass** der dritte (33) und der vierte (34) Festkontakt vertikal ausgerichtet sind.

5. Luftisolierte Mittelspannungsschaltanlage (1) nach einem oder mehreren der vorstehenden Ansprüche, **dadurch gekennzeichnet, dass** der erste (31) und der zweite (32) Festkontakt vertikal angeordnet sind.

6. Luftisolierte Mittelspannungsschaltanlage (1) nach einem oder mehreren der vorstehenden Ansprüche, **dadurch gekennzeichnet, dass** sie ein erstes Trennwandsystem (51) umfasst, das ein erstes Fach (11) zum Aufnehmen des Sammelschienenaufbaus (5) definiert und das erste Fach (11) von einem zweiten Fach (12), das den Leistungsschalteraufbau (4) aufnimmt, trennt.

7. Luftisolierte Mittelspannungsschaltanlage (1) nach Anspruch 6, **dadurch gekennzeichnet, dass** sie ein zweites Trennwandsystem (62) umfasst, das ein drittes Fach (13) zum Aufnehmen eines Einspeisesystems (6) definiert und das dritte Fach (13) von dem zweiten Fach (12), das den Leistungsschalteraufbau (4) aufnimmt, trennt.

8. Luftisolierte Mittelspannungsschaltanlage (1) nach Anspruch 6 oder 7, **dadurch gekennzeichnet, dass** das erste (51) und/oder das zweite (62) Trennwandsystem aus einem isolierenden Material bestehen.

9. Luftisolierte Mittelspannungsschaltanlage (1) nach Anspruch 6 oder 7, **dadurch gekennzeichnet, dass** das erste (51) und/oder das zweite (62) Trennwandsystem aus einem leitfähigen Material bestehen.

10. Luftisolierte Mittelspannungsschaltanlage (1) nach einem oder mehreren der Ansprüche 6 bis 9, **dadurch gekennzeichnet dass** der Leistungsschalteraufbau (4) für jede Phase zumindest eine erste Durchführung (71) umfasst.

11. Luftisolierte Mittelspannungsschaltanlage (1) nach Anspruch 10, **dadurch gekennzeichnet, dass** das erste (51) und/oder das zweite (62) Trennwandsystem eine Blende, die durch Interaktion mit der Durchführung (71) geöffnet / geschlossen werden kann, aufweist.

12. Luftisolierte Mittelspannungsschaltanlage (1) nach den Ansprüchen 9 und 10, **dadurch gekennzeichnet, dass** die Durchführung (71) eine Steuerdurchführung ist, die ein Isoliersystem aufweist, das auf einer Steuerung des elektrischen Feldes mit Steuerkondensatoren basiert.

13. Luftisolierte Mittelspannungsschaltanlage (1) nach den Ansprüchen 11 und 12, **dadurch gekennzeichnet, dass** das erste (51) und/oder das zweite (62) Trennwandsystem und die Blende aus einem leitfähigen Material bestehen und dass die Steuerung des elektrischen Feldes mit Steuerkondensatoren auf der Außenfläche der Durchführung (71) eine metallische konzentrische Schicht (711) umfasst.

14. Luftisolierte Mittelspannungsschaltanlage (1) nach Anspruch 13, **dadurch gekennzeichnet, dass** die metallische konzentrische Schicht (711) zur Erdung der Steuerdurchführung wirksam mit der metallischen Blende kuppelbar ist.

15. Luftisolierte Mittelspannungsschaltanlage (1) nach den Ansprüchen 7 und 11, **dadurch gekennzeichnet, dass** der Leistungsschalteraufbau (4) für jede Phase eine zweite Durchführung (72) umfasst, wobei das erste Trennwandsystem (51) eine Blende umfasst, die durch Interaktion mit der ersten Durchführung (71) geöffnet / geschlossen werden kann, wobei das zweite Trennwandsystem (62) eine Blende umfasst, die durch Interaktion mit der zweiten Durchführung (72) geöffnet / geschlossen werden kann.

## Revendications

1. Appareil de commutation moyenne tension à isolement dans l'air (1) comprenant un boîtier (2) définissant un volume interne (3) pour loger au moins un ensemble disjoncteur (4) et un ensemble de barre omnibus (5), ledit ensemble disjoncteur (4) étant déplaçable entre au moins deux positions de fonctionnement et comprenant, pour chaque phase, au moins un premier (411) et un second (412) contact d'insertion pouvant être couplés à et découplés de premier (31) et second (32) contacts fixes en déplaçant ledit ensemble disjoncteur (4), **caractérisé en ce que** ledit ensemble disjoncteur (4) comprend en outre un cadre de base isolant (41) supportant une unité d'interruption (42) comprenant pour chaque phase une chambre d'interruption, un actionneur (43) pour actionner l'opération d'ouverture/de fermeture de ladite unité d'interruption (42) et une chaîne cinématique reliant de manière opérationnelle ledit actionneur (43) à ladite unité d'interruption (42),
ledit second contact d'insertion (412) étant positionné vers l'extérieur par rapport à une surface inférieure dudit cadre isolant, lesdits premier et second contacts d'insertion (411, 412) étant alignés verticalement, un trajet de courant linéaire parallèle à un axe de ladite chambre d'interruption étant créé entre lesdits premier et second contacts d'insertion.

2. Appareil de commutation moyenne tension à isolement dans l'air (1) selon la revendication 1, **caractérisé en ce que** ledit premier contact fixe (31) est connecté électriquement audit ensemble de barre omnibus (5) et ledit second contact fixe (32) est connecté électriquement à un système d'alimentation (6).

3. Appareil de commutation moyenne tension à isolement dans l'air (1) selon la revendication 1 ou 2, **caractérisé en ce qu'**il comprend un troisième (33) et un quatrième (34) contact fixe, au moins un desdits troisième (33) et quatrième (34) contacts fixes étant au potentiel de terre, ledit ensemble disjoncteur (4) étant déplaçable entre une première position déconnectée, une seconde position à la terre, dans laquelle lesdits premier (411) et second (412) contacts d'insertion sont respectivement connectés électriquement auxdits troisième (33) et quatrième (34) contacts fixes, et une troisième position connectée, dans laquelle lesdits premier (411) et second (412) contacts d'insertion sont respectivement connectés électriquement auxdits premier (31) et second (32) contacts fixes.

4. Appareil de commutation moyenne tension à isolement dans l'air (1) selon la revendication 3, **caractérisé en ce que** lesdits troisième (33) et quatrième (34) contacts fixes sont alignés verticalement.

5. Appareil de commutation moyenne tension à isolement dans l'air (1) selon l'une ou plusieurs des revendications précédentes, **caractérisé en ce que** lesdits premier (31) et second (32) contacts fixes sont alignés verticalement.

6. Appareil de commutation moyenne tension à isolement dans l'air (1) selon l'une ou plusieurs des revendications précédentes, **caractérisé en ce qu'**il comprend un premier système de partitionnement (51) qui définit un premier compartiment (11) pour loger ledit ensemble de barre omnibus (5) et sépare ledit premier compartiment (11) d'un second compartiment (12) logeant ledit ensemble disjoncteur (4).

7. Appareil de commutation moyenne tension à isolement dans l'air (1) selon la revendication 6, **caractérisé en ce qu'**il comprend un second système de partitionnement (62) qui définit un troisième compartiment (13) pour loger un système d'alimentation (6) et sépare ledit troisième compartiment (13) dudit second compartiment (12) logeant ledit ensemble disjoncteur (4).

8. Appareil de commutation moyenne tension à isolement dans l'air (1) selon la revendication 6 ou 7, **caractérisé en ce que** lesdits premier (51) et/ou second (62) systèmes de partitionnement sont réalisés en un matériau isolant.

9. Appareil de commutation moyenne tension à isolement dans l'air (1) selon la revendication 6 ou 7, **caractérisé en ce que** lesdits premier (51) et/ou second (62) systèmes de partitionnement sont réalisés en un matériau conducteur.

10. Appareil de commutation moyenne tension à isolement dans l'air (1) selon l'une ou plusieurs des revendications 6 à 9, **caractérisé en ce que** ledit ensemble disjoncteur (4) comprend, pour chaque phase, au moins une première traversée (71).

11. Appareil de commutation moyenne tension à isolement dans l'air (1) selon la revendication 10, **caractérisé en ce que** lesdits premier (51) et/ou second (62) systèmes de partitionnement comprennent un volet qui peut être ouvert/fermé par interaction avec ladite traversée (71).

12. Appareil de commutation moyenne tension à isolement dans l'air (1) selon les revendications 9 et 10, **caractérisé en ce que** ladite traversée (71) est une traversée de répartition ayant un système d'isolation basé sur une commande de champ électrique de condensateurs de répartition.

13. Appareil de commutation moyenne tension à isolement dans l'air (1) selon les revendications 11 et 12, **caractérisé en ce que** lesdits premier (51) et/ou second (62) systèmes de partitionnement et ledit volet sont réalisés en un matériau conducteur et **en ce que** ladite commande de champ électrique de condensateurs de répartition comprend, sur la surface externe de ladite traversée (71), une couche concentrique métallique (711).

14. Appareil de commutation moyenne tension à isolement dans l'air (1) selon la revendication 13, **caractérisé en ce que** ladite couche concentrique métallique (711) peut être couplée de manière opérationnelle audit volet métallique pour mettre à la terre ladite traversée de répartition.

15. Appareil de commutation moyenne tension à isolement dans l'air (1) selon les revendications 7 et 11, **caractérisé en ce que** ledit ensemble disjoncteur (4) comprend, pour chaque phase, une seconde traversée (72), ledit premier système de partitionnement (51) comprenant un volet qui peut être ouvert/fermé par interaction avec ladite première traversée (71), ledit second système de partitionnement (62) comprenant un volet qui peut être ouvert/fermé par interaction avec ladite seconde traversée (72).
